# EUROPÄISCHE PATENTANMELDUNG

(11) **EP 4 375 397 A1**
(43) Veröffentlichungstag der Anmeldung: **29.05.2024**
(21) Anmeldenummer: 22020573.6
(22) Anmeldetag: 23.11.2022
(51) Int. Cl.: C25B 1/04, C25B 9/70, C25B 9/75, C25B 9/77, C25B 15/023, C25B 15/08

(54) **VERFAHREN UND ANLAGE ZUR HERSTELLUNG EINES ODER MEHRERER ELEKTROLYSEPRODUKTE**

(71) Anmelder: Linde GmbH, 82049 Pullach (DE)
(72) Erfinder: Stoffregen, Torsten, 82049 Pullach (DE); Gaube, Gerald, 82049 Pullach (DE); Dietzen, Markus, 82049 Pullach (DE); Fischer, Constantin, 82049 Pullach (DE)
(74) Vertreter: Imhof, Dietmar

(57) **Zusammenfassung**

Es wird ein Verfahren zur Herstellung eines oder mehrerer Elektrolyseprodukte unter Verwendung einer oder mehrerer Elektrolysezellen (10) vorgeschlagen, bei dem der einen oder den mehreren Elektrolysezellen (10) anodenseitig ein Wasserstoff enthaltendes Anodenentnahmegas und Wasser entnommen wird, bei dem das Anodenentnahmegas Sauerstoff enthält oder Sauerstoff dem Anodenentnahmegas zugegeben wird, und bei dem zumindest ein Teil des Anodenentnahmegases und des Wassers in einem oder in mehreren Zweiphasenströmen stromab der einen oder der mehreren Elektrolysezellen (10) durch eine oder mehrere Katalyseeinheiten (20) geführt wird, in der oder denen zumindest ein Teil des Wasserstoffs mit einem Teil des Sauerstoffs katalytisch zu Wasser umgesetzt wird. Eine entsprechende Anlage (100, 200) ist ebenfalls Gegenstand der vorliegenden Erfindung.

## Beschreibung

Die vorliegende Erfindung betrifft ein Verfahren und eine Anlage zur Herstellung eines oder mehrerer Elektrolyseprodukte, insbesondere Wasserstoff und/oder Sauerstoff, unter Einsatz einer oder mehrerer Elektrolysezellen, insbesondere einer oder mehrerer Elektrolysezellen mit Protonenaustauschmembran.

### Hintergrund der Erfindung

Die Herstellung von Wasserstoff unter Verwendung von Elektrolysezellen mit Protonenaustauschmembran (engl. Proton Exchange Membrane, PEM) ist bekannt. In entsprechenden Elektrolysezellen wird ein Festpolymerelektrolyt, die Protonenaustauschmembran, verwendet. Die Protonenaustauschmembran dient zur Leitung von Protonen, zur Abtrennung der Produktgase, und zur elektrischen Isolierung der Anoden- und Kathodenseite voneinander. Durch den Einsatz von Elektrolysezellen mit Protonenaustauschmembran kann ein Teil der Probleme hinsichtlich des Teillastbetriebs sowie der geringen möglichen Stromdichten, die bei der konventionellen alkalischen Elektrolyse auftreten, überwunden werden.

Aufgrund des vergleichsweise hohen Drucks des gebildeten Wasserstoffs bei der Verwendung von Elektrolysezellen mit Protonenaustauschmembran können Verbraucher direkt versorgt werden. Die verwendbaren hohen Stromdichten führen zu vergleichsweise geringen Betriebskosten, insbesondere in Fällen, in denen dynamische elektrische Energiequellen wie Wind und Sonne zum Einsatz kommen, wo Spitzen in der Energiezufuhr andernfalls nicht genutzt werden können.

Der Polymerelektrolyt ermöglicht die Verwendung dünner Membranen von beispielsweise ca. 100 bis 200 µm bei zugleich hohen Drücken. Dies führt zu geringen ohmschen Verlusten, die in erster Linie durch die Leitung von Protonen durch die Membran und die Bildung von druckbeaufschlagtem Wasserstoff verursacht werden. Die Polymerelektrolytmembran weist aufgrund ihrer festen Struktur eine niedrige Gasübergangsrate auf, was zu einer sehr hohen Produktgasreinheit führen kann. Dies kann insbesondere für die Speichersicherheit und für die direkte Verwendung, beispielsweise in einer Brennstoffzelle, vorteilhaft sein.

Die Anodenreaktion in einer Elektrolysezelle mit Protonenaustauschmembran wird gemeinhin als Sauerstoffentwicklungsreaktion (engl. Oxygen Evolution Reaction, OER) bezeichnet. An der Anode wird der flüssige Reaktant Wasser dem Katalysator zugeführt und zu Sauerstoff, Protonen und Elektronen oxidiert:

2 H₂O (I) → O₂ (g) + 4 H⁺ (aq) + 4 e⁻

Die Kathodenreaktion wird gemeinhin als Wasserstoffentwicklungsreaktion (engl. Hydrogen Evolution Reaction, HER) bezeichnet. Hierbei werden die zugeführten Elektronen mit den durch die Membran geleiteten Protonen kombiniert, wodurch gasförmiger Wasserstoff erzeugt wird:

4 H⁺ (aq) + 4 e⁻ → 2 H₂ (g)

Neben Wasserstoff von der Kathodenseite kann auch der in entsprechenden Elektrolysezellen an der Anodenseite gebildete Sauerstoff genutzt werden. Die vorliegende Erfindung kann sich auf die Gewinnung von Wasserstoff an der Kathodenseite und Sauerstoff an der Anodenseite beziehen.

Die vorliegende Erfindung stellt sich die Aufgabe, die Herstellung von Wasserstoff und/oder Sauerstoff, insbesondere unter Einsatz von Elektrolysezellen mit Protonenaustauschmembran, zu verbessern und insbesondere sicherer und zuverlässiger zu gestalten.

### Offenbarung der Erfindung

Vor diesem Hintergrund schlägt die vorliegende Erfindung ein Verfahren und eine Anlage zur Herstellung eines oder mehrerer Elektrolyseprodukte, insbesondere Wasserstoff und/oder Sauerstoff, und insbesondere unter Einsatz einer Elektrolysezelle mit einer Protonenaustauschmembran, mit den Merkmalen der unabhängigen Patentansprüche vor. Ausgestaltungen sind jeweils Gegenstand der abhängigen Ansprüche und der nachfolgenden Beschreibung.

Wenngleich die vorliegende Erfindung nachfolgend überwiegend unter Bezugnahme auf eine Elektrolyse beschrieben wird, in der eine Protonenaustauschmembran verwendet wird, können Ausgestaltungen der vorliegenden Erfindung grundsätzlich auch unter Verwendung von anderen Elektrolysetechniken eingesetzt werden, insbesondere dann, wenn dort Probleme, die in der vorliegenden Erfindung adressiert werden, in gleicher oder vergleichbarer Weise auftreten. Die Bezugnahme auf eine Elektrolyse mit Protonenaustauschmembran erfolgt lediglich zur Vereinfachung und ohne Intention, die vorliegende Erfindung hierauf einzuschränken.

Ist hiervon "einer" Elektrolysezelle, insbesondere mit "einer" Protonenaustauschmembran (jeweils im Singular), die Rede, versteht sich, dass Ausgestaltungen der vorliegenden Erfindung typischerweise mit mehreren solcher Elektrolysezelle realisiert sind, wobei entsprechende Elektrolysezellen insbesondere Teil eines Elektrolysezellstapels (Stacks) bekannter Art sein können, in denen solche Elektrolysezellen in Mehrzahl vorhanden sind. In einem derartigen Stack ist bei einer Elektrolyse unter Verwendung von Protonenaustauschmembranen eine Vielzahl von Anordnungen aus jeweils Anode, Protonenaustauschmembran und Kathode bereitgestellt, die jeweils durch Trenneinrichtungen und Mittel zur Wassereinspeisung bzw. Gasentnahme voneinander getrennt sind. Letztere können mit Einspeise- bzw. Sammelleitungen verbunden sein, die den gesamten Stapel versorgen. Bei anderen Arten der Elektrolyse kann ein vergleichbarer Stapelaufbau vorgesehen sein und auch hier können entsprechende Einspeise- und Sammelleitungen verwendet werden. Auch Anordnungen mit mehreren Elektrolysezellstapeln können verwendet werden.

Ist daher vorliegend von einer "Anodenseite" bzw. "Kathodenseite" einer Elektrolysezelle irgendeiner Art die Rede, können diese Begriffe auch die Kathodenseiten bzw. Anodenseiten der Elektrolysezellen entsprechender Zellstapel in Summe bezeichnen. Ein dieser/diesen Kathodenseite(n) (insgesamt) entnommenes Gas wird nachfolgend auch als "Kathodenentnahmegas" bezeichnet. Entsprechendes gilt an der Anodenseite, d.h. ein "Anodenentnahmegas".

Das Kathodenentnahmegas ist wasserstoffreich, das Anodenentnahmegas sauerstoffreich, wobei das Anodenentnahmegas jedoch typischerweise mehr Wasserstoff aufweist als das Kathodenentnahmegas Sauerstoff, da Wasserstoff typischerweise leichter an die Anodenseite übergeht als der Sauerstoff zur Kathodenseite. Durch den Einsatz von Protonenaustauschmembranen können, wie erwähnt, hohe Produktreinheiten erzielt werden, so dass das Kathodenentnahmegas sehr wenig Sauerstoff enthält. Aber auch in anderen Elektrolysetechniken können wasserstoffreiche bzw. sauerstoffreiche Kathoden- bzw. Anodenentnahmegase gebildet werden, die jeweils das andere Gas in einem geringeren Anteil enthalten. Der Begriff "reich" kann dabei insbesondere für einen Gehalt von mehr als 90%, 95%, 99% oder 99,5% auf Volumen-, Mengen- oder molarer Basis stehen.

Das Anodenentnahmegas wird, insbesondere bei der Elektrolyse mit Protonenaustauschmembranen, zusammen mit Wasser an der Anodenseite entnommen, d.h. von der Anodenseite wird zunächst ein Zweiphasenstrom ausgeführt. Nach einer Trennung in Gas- und Flüssigphase kann erstere beispielsweise einer Sauerstoffgewinnung zugeführt oder an die Atmosphäre abgegeben werden.

Ein Hauptproblem hinsichtlich des Zweiphasenstroms, der Sauerstoff und Wasser aufweist, ergibt sich aus dessen möglichem Wasserstoffgehalt. Angetrieben beispielsweise durch das Druckgefälle über die Protonenaustauschmembran kann Wasserstoff durch diese passieren, und zwar durch Permeation, verstärkt aber beim Auftreten von Defekten bzw. Rissen. Beispielsweise in Szenarien von Niedriglast, im Standby, bzw. bei Defekten kann dieser Wasserstoffgehalt ggf. die untere Explosionsgrenze (UEG) von ca. 4% Wasserstoff in Sauerstoff erreichen. Ein entsprechender Übergang von Wasserstoff kann grundsätzlich auch in anderen Elektrolysetechniken auftreten.

Die (untere) Explosionsgrenze eines Gases gibt den Gehalt in einem Gasgemisch an, ab dem eine Entzündung bzw. Explosion bei zugleich ausreichendem Sauerstoffgehalt möglich ist. Letzteres ist im Falle des sauerstoffreichen Anodenentnahmegases bzw. des genannten Zweiphasenstroms immer der Fall.

Bei einer Explosion handelt es sich um einen unkontrollierten Abbrand eines zündfähigen Gasgemischs mit laminarer Flammenfront. Eine Explosion unterscheidet sich von einer Detonation im Wesentlichen durch die Geschwindigkeit der Ausbreitung.

Bei einer Explosion liegt diese unterhalb, bei einer Detonation typischerweise deutlich oberhalb der Schallgeschwindigkeit. Durch Explosionen und Detonationen von Gasgemischen in Behältern und Rohrleitungen kommt es zu einem massiven Druckanstieg, der zum Bersten der Behälter und entsprechenden Folgeschäden führen kann. Typischerweise kann bei einer Explosion mit einer Druckerhöhung um den Faktor Zehn gerechnet werden. Die Auswirkungen einer Detonation sind deutlich schwerwiegender. Hier kann der Druckanstiegsfaktor 50 und mehr betragen. Eine Explosion kann nach einer bestimmten Anlauflänge und einer Mindestkonzentration an Brennstoff und Sauerstoff in eine Detonation umschlagen.

Eine Zündquelle im Bereich innerhalb und stromab einer Elektrolysezelle, beispielsweise mit Protonenaustauschmembran, bzw. eines entsprechenden Stacks, kann nicht vollständig ausgeschlossen werden. Damit muss eine mögliche Zündung des explosionsgefährdeten Gasgemisches bei der Auslegung einer entsprechenden Anlage angenommen werden.

Die Knallgasreaktion verläuft sehr schnell, so dass sich sehr rasch ausbreitende Flammengeschwindigkeiten ergeben, die oberhalb der Schallgeschwindigkeit liegen. Daher kann eine Explosion selbst in kleinen Räumen und Rohrleitungen in eine Detonation übergehen. Für ein Detonationsszenario müssen sehr hohe Explosionsdruckverhältnisse bei der Auslegung berücksichtigt werden.

Hierbei können sich auch dann, wenn eine Explosion bzw. Detonation "nur" in einem Separator zur Trennung des Zweiphasenstroms auftritt, Schäden in anderen Bereichen, insbesondere nachgeschalteten Apparaten wie Pumpen oder Wärmetauschern bzw. einer Elektrolysezelle bzw. einem Stack selbst ergeben, da der Explosionsdruck über das inkompressible Fluid (Wasser) auf diese übertragen wird.

Die vorliegende Erfindung ermöglicht sichere Lösungen für derartige Fälle und überwindet dabei die Nachteile des Standes der Technik. Herkömmlicherweise ist eine entsprechende explosions- bzw. detonationsfeste Auslegung bestenfalls sehr teuer und schlechtestenfalls technisch nicht realisierbar. Auch ein Schutz nachgeschalteter Apparate durch Druckentlastungsventile bzw. Berstscheiben kann herkömmlicherweise problematisch sein, da sich die Druckwelle der Explosion bzw. Detonation sehr rasch, d.h. mit ca. 3.000 m/s ausbreitet.

Beispielsweise aus der Veröffentlichung von N. Briguglio , F. Pantö, S. Siracusano, A.S. Aricö, "Enhanced performance of a PtCo recombination catalyst for reducing the H2 concentration in the O2 stream of a PEM electrolysis cell in the presence of a thin membrane and a high differential pressure", Electrochimica Acta 344 (2020) 136153, ist bekannt, eine Membran-Elektroden-Anordnung (MEA) in einer entsprechenden Elektrolyse mit einem Rekombinationskatalysator auszustatten. Insbesondere wird dieser innerhalb der Anode eingesetzt, wo der permeierte Wasserstoff auf den entwickelten Sauerstoff trifft. Der Rekombinationskatalysator katalysiert eine Reaktion zwischen Wasserstoff und Sauerstoff zu Wasser, so dass der Wasserstoffgehalt verringert werden kann. Andere konventionelle Ausgestaltungen können die Ausstattung einer Protonenaustauschmembran mit einem entsprechenden Rekombinationskatalysator umfassen.

Die vorliegende Erfindung schlägt dagegen ein Verfahren zur Herstellung eines oder mehrerer Elektrolyseprodukte unter Verwendung einer oder mehrerer Elektrolysezellen vor, bei dem der einen oder den mehreren Elektrolysezellen anodenseitig ein Wasserstoff enthaltendes Anodenentnahmegas und Wasser entnommen wird, bei dem das Anodenentnahmegas ferner Sauerstoff enthält oder dem Anodenentnahmegas Sauerstoff zugegeben wird, und bei dem zumindest ein Teil Anodenentnahmegases und des Wassers in einem oder in mehreren Zweiphasenströmen stromab der einen oder der mehreren Elektrolysezellen durch eine oder mehrere Katalyseeinheiten geführt wird, in der oder denen zumindest ein Teil des Wasserstoffs mit einem Teil des Sauerstoffs katalytisch zu Wasser umgesetzt wird.

Im Unterschied zum Stand der Technik umfasst die vorgeschlagene Lösung damit, den Rekombinationskatalysator nicht in der Membran oder einer anderen membrannahen bzw. mit der Membran verbundenen Struktur in einer Membran-Elektroden-Anordnung, sondern in einer separaten Ausrüstung vorzuhalten, nämlich einer stromab angeordneten Katalyseeinheit.

Durch den Einsatz von Ausgestaltungen der vorliegenden Erfindung lässt sich eine Reihe von Vorteilen gegenüber dem Stand der Technik erzielen. Diese umfassen beispielsweise, dass keine Einschränkung durch den Rekombinationskatalysator bei der Realisierung bzw. Optimierung der Elektrolysemembran und der Membran-Elektroden-Anordnung besteht. Auch Einschränkungen bei der Auslegung des Rekombinationskatalysators bzw. dessen Bereitstellung durch Randbedingungen, die eine Applikation auf der Membran mit sich bringen, entfallen.

Die vorliegende Erfindung und Ausgestaltungen hiervon verringern insbesondere Sicherheitsrisiken durch Wasserstoff auf der Anodenseite durch Membranriss bzw. lokale Beschädigung. Eine Applikation auf der Membran bzw. in einer Membran-Elektroden-Anordnung hätte in diesem Fall keine oder nur eingeschränkte Wirkung. Dies kann als Auslegungsfall für den Rekombinationskatalysator berücksichtigt werden, wodurch entsprechende Risiken reduziert und ggf. ausgeschlossen werden.

Betriebsszenarien, die möglicherweise kritische Wasserstoffkonzentrationen (hierunter werden insbesondere Wasserstoffkonzentrationen von mehr als 2 Volumenprozent, d.h. ca. 50% der unteren Explosionsgrenze verstanden) können bei Anlagenstillstand, d.h. 0% Last, und bei Teillast, beispielsweise 20% Last, auftreten. Im ersteren Fall kann die Anlage ist im Standby betrieben werden, die entsprechenden Pumpen laufen bei minimaler Last, und es wird kein Wasserstoff und Sauerstoff mehr produziert. Allerdings ist die Kathodenseite im Beispielfall einer Elektrolyse mit Protonenaustauschmembran noch mit Wasserstoff bei etwa 30 bar Überdruck befüllt, welcher durch den Druckunterschied durch die Membran zur Anodenseite diffundiert. Durch den Wasserstrom an der Anode wird der diffundierte Wasserstoff in den nachgeschalteten Separator transportiert. Es kommt dort zur Wasserstoffansammlung. Im Teillastfall werden weiterhin Wasserstoff und Sauerstoff produziert. Wasserstoff diffundiert durch die Membran zur Anode, strömt mit dem Sauerstoff zusammen in den Separator und sammelt sich dort ebenfalls an.

Herkömmlicherweise werden entsprechende Anlagen ab 50% der unteren Explosionsgrenze, also einer detektierten Wasserstoffkonzentration von 2 Volumenprozent, bereits abgeschaltet. Während Betriebsszenarien, in denen die Wasserstoffkonzentration diesen Wert überschreitet, kann dem Separator ein Spülgas zugeführt werden, um den Wasserstoff zu verdünnen. Die vorliegende Erfindung kann durch den Einsatz insbesondere passiv arbeitender katalytischer Einheiten, die keine Regeleinrichtungen, Spülgasgebläse usw. benötigen, eine verbesserte passive Sicherheit sicherstellen. Weitere Sicherheitsmaßnahmen können ebenfalls gemindert werden.

Der Rekombinationskatalysator kann so ausgelegt werden, dass eine Nutzung von Sauerstoff als Elektrolyseprodukt ohne nachgeschalteten Reaktor zur Reduzierung des Wasserstoffanteils im Sauerstoff auch bei niedrigen Lastzuständen möglich wird. Diese erfolgt herkömmlicherweise auch katalytisch (sog. CatOx). Die Erfindung ermöglicht es, auf einen separaten Sauerstoffentfernungsschritt im Gasstrom nach der Wasserabscheidung zu verzichten. Die Erfindung sieht damit in Ausgestaltungen insbesondere vor, dass das eine Elektrolyseprodukt oder eines der mehreren Elektrolyseprodukte Sauerstoff ist.

Die eine oder die mehreren katalytischen Einheiten wird bzw. werden vorteilhafterweise an einem Ort verbaut, an dem eine gute Verteilung der Gasphase in der Rohrleitung vom Elektrolysezellstapel zum Separator vorhanden ist. Durch eine gute Verteilung der Gasphase über die Katalysatoroberfläche kann mehr Wasserstoff umgesetzt werden. In einem ersten Ausführungsbeispiel können mehrere Elektrolysezellen verwendet werden, die in mehreren Elektrolysezellstapeln angeordnet sind, wobei der eine oder zumindest einer der mehreren Zweiphasenströme durch Vereinigung von Anodenentnahmegas und Wasser aus mehreren Elektrolysezellstapeln gebildet werden. In einer anderen Ausgestaltung können ebenfalls mehrere Elektrolysezellen verwendet werden, die in mehreren Elektrolysezellstapeln angeordnet sind, wobei der eine oder zumindest einer der mehreren Zweiphasenströme jeweils durch Anodenentnahmegas und Wasser aus jeweils nur einem der mehreren Elektrolysezellstapel gebildet wird. Die vorliegende Erfindung ist durch diese Ausführungsbeispiele nicht beschränkt.

Im Rahmen der vorliegenden Erfindung lässt sich insbesondere auch die Temperaturentwicklung im Katalysatorbett der Katalyseeinheit aufgrund der Wasserstoffumsetzung vergleichsweise einfach überwachen, insbesondere im Gegensatz zu einer Temperaturüberwachung der Membranflächen. Auf diese Weise kann ein Wasserstoffdurchbruch bzw. Membranriss einfach detektiert werden. Damit steht eine vergleichsweise einfache Analyse (Wasserstoffgehalt als Funktion der Temperatur) zur Verfügung, die anderen Analysemethoden in diesem Strom und für diesen Anwendungsfall überlegen ist. In entsprechenden Ausgestaltungen der Erfindung kann also vorgesehen sein, dass eine Temperaturerfassung in der einen oder zumindest einer der mehreren Katalyseeinheiten vorgenommen wird, und dass insbesondere auf Grundlage der Temperaturerfassung eine Defektdiagnose einer oder mehrerer Elektrolysemembranen in der einen oder der mehreren Elektrolysezellen vorgenommen wird. Beispielsweise kann auf einen Defekt erkannt werden, wenn ein Temperaturwert einen Temperaturschwellwert überschreitet.

In dem Verfahren kann ein Wassergehalt in dem einen oder den mehreren Zweiphasenströmen bei 90 Masseprozent bis 99,9 Masseprozent betragen und die Katalyseeinheit(en) ist bzw. sind dafür eingerichtet, einen entsprechenden Zweiphasenstrom, der typischerweise auf einem Temperaturniveau von 60 °C oder weniger vorliegt, zu bearbeiten.

Im 0%-Lastszenario, das zuvor erläutert wurde, kann die zur Rekombination benötigten Menge an Sauerstoff ggf. nicht ausreichen. In diesem Fall kann ein Sauerstoffstrom, bspw. kohlendioxidfreie Luft, der oder den katalytischen Einheiten zugeführt werden, damit der Wasserstoff zu Wasser umgesetzt werden kann. Die derzeitige Spülung des Separators ist aufwendig und kostenintensiv. Die Spülung muss in allen Szenarien, unter anderem Stromausfall, funktionieren. Damit ist ein apparativer Aufwand, Regelungsaufwand, etc. verbunden. Dazu werden für die Spülung bis zu 300 kg/h an z.B. Stickstoff benötigt. Dies wird durch die vorliegende Erfindung vermieden.

Mit anderen Worten kann das vorgeschlagene Verfahren einen ersten und einen zweiten Verfahrensmodus umfassen, wobei das Anodenentnahmegas in dem ersten Verfahrensmodus Wasserstoff und Sauerstoff enthält und dem Anodenentnahmegas in dem zweiten Verfahrensmodus Sauerstoff zugegeben wird, wobei in dem ersten Verfahrensmodus unter Verwendung der einen oder der mehreren Elektrolysezellen kathodenseitig Elektrolysewasserstoff und anodenseitig Elektrolysesauerstoff produziert wird, und wobei in dem ersten Verfahrensmodus unter Verwendung der einen oder der mehreren Elektrolysezellen kathodenseitig weniger Elektrolysewasserstoff und anodenseitig weniger Elektrolysesauerstoff als in dem ersten Verfahrensmodus oder kathodenseitig kein Elektrolysewasserstoff und anodenseitig kein Elektrolysesauerstoff produziert wird.

Wie erwähnt kann bzw. können die eine oder die mehreren Katalyseeinheiten insbesondere dazu eingerichtet sein, einen Wasserstoffgehalt in einem Gasanteil des einen oder der mehreren Zweiphasenströme auf weniger als 50% der unteren Explosionsgrenze zu reduzieren. Somit kann ggf. auf eine Gasspülung oder dergleichen verzichtet werden.

In einem entsprechenden Verfahren kann in der einen oder in den mehreren Katalyseeinheiten ein Katalysatormaterial verwendet werden, das aus den unten genauer erläuterten Materialien ausgewählt ist. Ein entsprechender, passiver und autokatalytischer Rekombinationskatalysator ist insbesondere in der Lage, Wasserstoff in einer "nassen" Umgebung umzusetzen. Der passive und autokatalytische Rekombinationskatalysator hat den besonderen Vorteil, dass nur ein sehr geringer Reglungsaufwand erforderlich ist. Insbesondere ist keine Zufuhr von elektrischer Energie erforderlich, um Wasserstoff umzusetzen.

Der Begriff des "passiven" und "autokatalytischen" Rekombinationskatalysators beschreibt dabei einen Rekombinationskatalysator, der ohne weitere Beeinflussung wie Temperaturerhöhung oder Zugabe von weiteren Komponenten die Reaktion in dem Zweiphasenstrom katalysiert.

In Ausgestaltungen der vorliegenden Erfindung kann es sich bei dem Katalysator um ein Platin- bzw. Palladiummaterial und/oder eine Platin- oder Palladiumlegierung, beispielsweise mit Cobalt und/oder Nickel, auf einem Trägermaterial handeln. Als aktives Material kann alternativ oder zusätzlich auch Iridium oder Ruthenium zum Einsatz kommen. Als Trägermaterialien kommen in Ausgestaltungen der vorliegenden Erfindung beispielsweise Aluminiumoxid bzw. Dialuminiumtrioxid, Siliziumdioxid oder Ceroxid in Frage. Grundsätzlich können in Ausgestaltungen er Erfindung alle inerten oder aktiven Trägermaterialen zum Einsatz kommen.

Nicht einschränkende Beispiele für einen entsprechenden Katalysator umfassen beispielsweise einen Gehalt von 0,05 bis 0,3% auf Mol- oder Massebasis an Platin, einen Gehalt von 0,05 bis 0,3% auf Mol- oder Massebasis an Palladium, und einen Träger aus oder umfassend Dialuminiumtrioxid. Konkrete Beispiele für den Platin- und Palladiumgehalt sind jeweils 0,15%.

Grundsätzlich sollte ein entsprechender Katalysator Anforderungen wie eine hohe Aktivität und die Fähigkeit, oxidierenden Bedingungen (einer reduzierenden Umgebung) standzuhalten, erfüllen.

Zu ebenfalls einsetzbaren Legierungen kann auf Fachliteratur wie N. Briguglio et al., Electrochimica Acta 344 (2020) 136153, verwiesen werden. Entsprechende Legierungen können insbesondere dazu verwendet werden, die Aktivität des Katalysators zu erhöhen. Beispiele sind der Einsatz einer Platin-Cobalt-Legierung mit Legierungsanteilen von Platin zu Cobalt von beispielsweise 85:15 Atomprozent bzw. 50:50 bis (95:5 Atomprozent, bzw. Platin- oder Palladium-Nickel-Legierungen mit entsprechenden Anteilen.

Die Spülung des Separators zu Mitigierungszwecken wird gemäß Ausgestaltungen der Erfindung nicht mehr benötigt. Die Mengen an Sauerstoff, die im 0%-Lastbetrieb benötigt werden, sind mit typischerweise unter 5 kg/h sehr gering im Vergleich zu den benötigten Mengen an Spülgas. Eine Erweiterung des Betriebsbereichs im Sinne einer Verringerung der minimalen Last eines entsprechenden Elektrolyseurs ist in Ausgestaltungen der Erfindung ggf. auch möglich.

Eine Anlage zur Herstellung eines oder mehrerer Elektrolyseprodukte mit einer oder mehreren Elektrolysezellen ist ebenfalls Gegenstand der vorliegenden Erfindung, wobei die Anlage dafür eingerichtet ist, der einen oder den mehreren Elektrolysezellen anodenseitig ein Sauerstoff und Wasserstoff enthaltendes Anodenentnahmegas und Wasser zu entnehmen, und wobei die Anlage ferner dafür eingerichtet ist, zumindest einen Teil des Anodenentnahmegases und des Wassers in einem oder in mehreren Zweiphasenströmen stromab der einen oder der mehreren Elektrolysezellen durch eine oder mehrere Katalyseeinheiten zu führen und in dieser oder diesen zumindest einen Teil des Wasserstoffs mit einem Teil des Sauerstoffs katalytisch zu Wasser umzusetzen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 eine Anlage gemäß einer Ausgestaltung der Erfindung veranschaulicht, und
Figur 2 eine Anlage gemäß einer Ausgestaltung der Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine Elektrolyse mit Protonenaustauschmembran erläutert. Wie mehrfach angesprochen, ist die Erfindung jedoch nicht hierauf beschränkt.

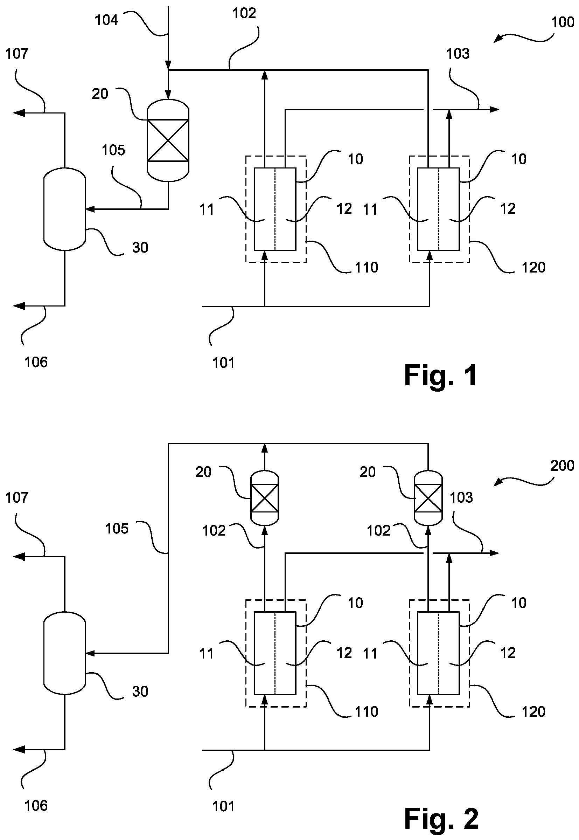

In Figur 1 ist eine Anlage gemäß einer Ausgestaltung der vorliegenden Erfindung veranschaulicht und insgesamt mit 100 bezeichnet.

Die Anlage umfasst im dargestellten Beispiel, ohne die vorliegende Erfindung in irgendeiner Weise entsprechend zu beschränken, Elektrolysezellen 10 in zwei Elektrolysezellstapeln 110 und 120. Die Elektrolysezellen 10 sind dabei jeweils in Vielzahl vorhanden und weisen jeweils eine Anodenseite 11 und eine Kathodenseite 12 auf. Die genannten Komponenten sind stark vereinfacht veranschaulicht. Weitere Komponenten wie beispielsweise Ventilatoren sind nicht dargestellt. Auch ist auf eine Darstellung von Ventilen und Regeleinrichtungen, Messfühlern, Sensoren und dergleichen der Übersichtlichkeit halber verzichtet worden.

Den Elektrolysezellen wird anodenseitig jeweils Wasser 101 zugeführt. Im Betrieb bildet sich durch die Sauerstoffentwicklungsreaktion an der bzw. den Anodenseite(n) 11 Sauerstoff, der in jeweils mit Wasser in einem Zweiphasenstrom 102 von der bzw. den Anodenseite(n) 11 abtransportiert wird. Wie erwähnt, enthält dieser Zweiphasenstrom 102, bzw. ein hier als "Anodenentnahmegas" bezeichneter Gasanteil hiervon, gewisse Mengen Wasserstoff, was zu den eingangs erwähnten Problemen führen kann. Ferner bildet sich durch die Wasserstoffentwicklungsreaktion an der bzw. den Kathodenseite(n) 12 Wasserstoff, der in Form eines Wasserstroms 103 von der bzw. den Kathodenseite(n) 12 abtransportiert wird.

In der hier veranschaulichten Ausgestaltung der Erfindung ist eine Katalyseeinheit 20 vorgesehen, in der die zusammengefassten Entnahmegase von den Anodenseiten 11 der Elektrolysezellen 10 in einem Zweiphasengemisch mit Wasser katalytisch derart bearbeitet werden, dass zumindest ein Teil des Wasserstoffs mit einem Teil des Sauerstoffs katalytisch zu Wasser umgesetzt wird. Bei Bedarf, d.h. insbesondere in den erwähnten 0%-Lastfällen, kann weiterer Sauerstoff in einem Stoffstrom 104, der beispielsweise kohlendioxidfreie Luft darstellen kann, zugeführt werden.

Das entsprechend bearbeitete Zweiphasengemisch wird im dargestellten Beispiel in Form eines Stoffstroms 105 in einen Separator 30 eingespeist, in der der Wasseranteil in Form eines Wasserstroms 106 abgeschieden wird. Auf diese Weise kann im Wesentlichen reiner Sauerstoff in Form eines Stoffstroms 107 gewonnen und beispielsweise einer (nicht dargestellten) Trocknung, Verdichtung und dergleichen zugeführt werden, falls eine Gewinnung als Elektrolyseprodukt vorgesehen ist.

In Figur 2 ist eine Anlage gemäß einer weiteren Ausgestaltung der vorliegenden Erfindung veranschaulicht und insgesamt mit 200 bezeichnet.

Die in Figur 2 veranschaulichte Ausgestaltung der vorliegenden Erfindung unterscheidet sich von der in Figur 1 veranschaulichten insbesondere dadurch, dass für jeden Elektrolysezellstapel 110, 120 jeweils eine katalytische Einheit vorhanden ist und erst das hier bearbeitete Zweiphasengemisch zu dem Stoffstrom 105 zusammengefasst wird. Weitere Ausgestaltungen, mehrfache Anordnungen von katalytischen Einheiten usw. sind in beliebigen Varianten möglich, ohne den Rahmen der vorliegenden Erfindung zu verlassen.

## Patentansprüche

1. Verfahren zur Herstellung eines oder mehrerer Elektrolyseprodukte unter Verwendung einer oder mehrerer Elektrolysezellen (10), bei dem der einen oder den mehreren Elektrolysezellen (10) anodenseitig ein Wasserstoff enthaltendes Anodenentnahmegas und Wasser entnommen wird, bei dem das Anodenentnahmegas Sauerstoff enthält oder Sauerstoff dem Anodenentnahmegas zugegeben wird, und bei dem zumindest ein Teil des Anodenentnahmegases und des Wassers in einem oder in mehreren Zweiphasenströmen stromab der einen oder der mehreren Elektrolysezellen (10) durch eine oder mehrere Katalyseeinheiten (20) geführt wird, in der oder denen zumindest ein Teil des Wasserstoffs mit einem Teil des Sauerstoffs katalytisch zu Wasser umgesetzt wird.

2. Verfahren nach Anspruch 1, bei dem das eine Elektrolyseprodukt oder eines der mehreren Elektrolyseprodukte Sauerstoff ist.

3. Verfahren nach Anspruch 1 oder 2, bei dem mehrere Elektrolysezellen (10) verwendet werden, die in mehreren Elektrolysezellstapeln (110, 120) angeordnet sind, wobei der eine oder zumindest einer der mehreren Zweiphasenströme durch Vereinigung von Anodenentnahmegas und Wasser aus mehreren Elektrolysezellstapeln (110, 120) gebildet werden.

4. Verfahren nach Anspruch 1 oder 2, bei dem mehrere Elektrolysezellen (10) verwendet werden, die in mehreren Elektrolysezellstapeln (110, 120) angeordnet sind, wobei der eine oder zumindest einer der mehreren Zweiphasenströme durch Anodenentnahmegas und Wasser aus jeweils nur einem der mehreren Elektrolysezellstapel (110, 120) gebildet wird.

5. Verfahren nach einem der vorstehenden Ansprüche, bei dem eine Temperaturerfassung in der einen oder zumindest einer der mehreren Katalyseeinheiten (20) vorgenommen wird.

6. Verfahren nach Anspruch 5, bei dem auf Grundlage der Temperaturerfassung eine Defektdiagnose einer oder mehrerer Elektrolysemembranen in der einen oder der mehreren Elektrolysezellen (10) vorgenommen wird.

7. Verfahren nach einem der vorstehenden Ansprüche, bei dem ein Wassergehalt in dem einen oder den mehreren Zweiphasenströmen bei 90 Masseprozent bis 99,9 Masseprozent liegt.

8. Verfahren nach einem der vorstehenden Ansprüche, das einen ersten und einen zweiten Verfahrensmodus umfasst, wobei das Anodenentnahmegas in dem ersten Verfahrensmodus Wasserstoff und Sauerstoff enthält und dem Anodenentnahmegas in dem zweiten Verfahrensmodus Sauerstoff zugegeben wird, wobei in dem ersten Verfahrensmodus unter Verwendung der einen oder der mehreren Elektrolysezellen (10) kathodenseitig Elektrolysewasserstoff und anodenseitig Elektrolysesauerstoff produziert wird, und wobei in dem ersten Verfahrensmodus unter Verwendung der einen oder der mehreren Elektrolysezellen (10) kathodenseitig weniger Elektrolysewasserstoff und anodenseitig weniger Elektrolysesauerstoff als in dem ersten Verfahrensmodus oder kathodenseitig kein Elektrolysewasserstoff und anodenseitig kein Elektrolysesauerstoff produziert wird.

9. Verfahren nach einem der vorstehenden Ansprüche, bei dem die eine oder die mehreren Katalyseeinheiten (20) dazu eingerichtet sind, einen Wasserstoffgehalt in einem Gasanteil des einen oder der mehreren Zweiphasenströme auf weniger als 50% der unteren Explosionsgrenze zu reduzieren.

10. Verfahren nach einem der vorstehenden Ansprüche, bei dem in der einen oder in den mehreren Katalyseeinheiten (20) ein Katalysatormaterial verwendet wird, das aus einem Platin- bzw. Palladiummaterial und/oder einer Platin- oder Palladiumlegierung ausgewählt ist.

11. Anlage (100, 200) zur Herstellung eines oder mehrerer Elektrolyseprodukte mit einer oder mehreren Elektrolysezellen (10), wobei die Anlage (100, 200) dafür eingerichtet ist, der einen oder den mehreren Elektrolysezellen (10) anodenseitig ein Sauerstoff und Wasserstoff enthaltendes Anodenentnahmegas und Wasser zu entnehmen, und wobei die Anlage (100, 200) ferner dafür eingerichtet ist, zumindest einen Teil des Anodenentnahmegases und des Wassers in einem oder in mehreren Zweiphasenströmen stromab der einen oder der mehreren Elektrolysezellen (10) durch eine oder mehrere Katalyseeinheiten (20) zu führen und in dieser oder diesen zumindest einen Teil des Wasserstoffs mit einem Teil des Sauerstoffs katalytisch zu Wasser umzusetzen.

12. Anlage (100, 200) nach Anspruch 11, die zur Durchführung eines Verfahrens nach einem der Ansprüche 1 bis 10 eingerichtet ist.
